Europäisches Patentamt

European Patent Office

Office européen des brevets

(11) Publication number: **0 480 545 A2**

# EUROPEAN PATENT APPLICATION

(21) Application number: **91203348.7**

(22) Date of filing: **06.01.89**

(51) Int. Cl.5: **F02B 19/10**, F02M 21/02, F02D 19/02, F01L 9/00

This application was filed on 18 - 12 - 1991 as a divisional application to the application mentioned under INID code 60.

(43) Date of publication of application:
**15.04.92 Bulletin 92/16**

(60) Publication number of the earlier application in accordance with Art.76 EPC: **0 377 265**

(84) Designated Contracting States:
**DE FR**

(71) Applicant: **YANMAR DIESEL ENGINE CO. LTD.**
**1-32, Chaya-machi Kita-ku**
**Osaka-shi Osaka(JP)**

(72) Inventor: **Nakazono, Touru, c/o Yanmar Diesel Eng. Co. Ltd.**
**1-32, Kita-ku, Chaya-machi**
**Osaka-shi, Osaka(JP)**
Inventor: **Natsme, Yoshihivo, c/o Yanmar Diesel Eng. Co. Ltd.**
**1-32, Kita-ku, Chaya-machi**
**Osaka-shi, Osaka(JP)**
Inventor: **Furuta, Takashi, c/o Yanmar Diesel Eng. Co. Ltd.**
**1-32, Kita-ku, Chaya-machi**
**Osaka-shi, Osaka(JP)**

(74) Representative: **Barker, Rosemary Anne et al**
**c/o Mewburn Ellis, 2 Cursitor Street**
**London EC4A 1BO(GB)**

(54) **Gas engine.**

(57) In a gas engine a passage (18) for supply of fuel gas to the pre-combustion chamber (12) is provided with a check valve (24) adapted to be opened by negative pressure in the pre-chamber (12). The check valve (24) comprises a valve body (135) on a valve stem (134) which is slidably fitted into valve guide means (132, 133) closed by a cylindrical cap (139). To improve the valve opening characteristics pressures across the valve body and stem are balanced by a connecting passage (50;60;70) between a lower space (138) in the valve guide means (133), which connects to the pre-chamber (12) only when the valve body (135) opens, and an upper space (130) in the cap (139). Further, to avoid contamination, the end (48,67,72) of the connecting passage (50,60,70) which opens into the upper space (130) is spaced from an end (143, 77) of a pipe (21) which supplies lubricating oil thereto.

FIG.5

This invention relates to a gas engine of the type which includes a pre-combustion chamber and which is commonly used for driving an electric generator or for a co-generation system.

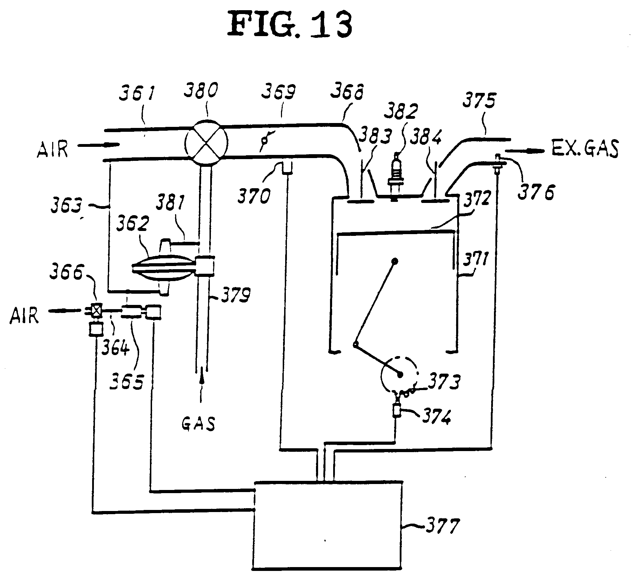

As shown in Figure 10, a conventional gas engine of this type includes a main combustion chamber 10 and a pre-combustion chamber 12 connected thereto. A lean mixture of fuel and air is supplied through an intake part 14, while a rich mixture of fuel and air is formed in the pre-chamber 12 by fuel gas supplied through a gas pipe 18. A spark plug 20 initially ignites the rich mixture in the pre-chamber 12 to cause combustion in the main chamber 10 so as to achieve low fuel consumption and clean exhaust gas.

The engine also includes a gas regulator 15, a throttle valve 16, a mixer 17, an igniter 19, a lubricating oil pipe 21, a pump 23, an intake valve 25, and an exhaust valve 26. The gas pipe 18 is provided with a check valve 24, which is disclosed in Japanese patent specification No. 63-37946 by the applicant. The check valve 24 is opened by negative pressure in the chamber 12 and closed by positive pressure therein (Figure 11).

If the engine as described above is large in size, the mixture flows into the pre-chamber 12 at excessively high velocity, which deteriorates ignitability in the chamber 12, as stated in Japanese Utility publication No. 55-14749.

As shown in Figure 11, the pre-chamber 12 is formed in a body 125 which is screwed into a cylinder head 126 with packing 127 therebetween. The top end of the body 125 is welded to a sleeve 28 in which the plug 20 and the check valve 24 are mounted.

The upper portion of the check valve 24 is located in a first chamber 130 which is connected to the gas pipe 18. The lower portion of the valve 24 is disposed in a second chamber 131 which is connected to the pre-chamber 12. Thus, the check valve 24 controls the flow of gas from the gas pipe 18 into the pre-chamber 12 through the chamber 131.

As shown in Figure 12, the check valve 24 comprises a valve holder 132, a valve guide 133, a valve stem 134 slidably fitted in the guide 133, a valve body 135 and a valve spring 136. The negative pressure applied to the valve body 135 in the intake stroke draws it down away from a valve seat 137 against the elastic force of the spring 136, and thus the valve 24 opens. The upper chamber 130 is formed in a cap 139, and a lower space 138 is formed in the valve guide 133.

In the prior art structures, when the pressure in the chamber 130 decreases it may become difficult to supply gas to the chamber 12.

Further, a difference between the pressures in the spaces 130 and 138 may restrain the opening operation of the valve body 135, and thus cause a delay thereof, which results in unfavourable opening characteristics. Japanese patent publication 62-331 relates to this matter.

For gas engines of three-way catalyst type, without a pre-chamber, mixture ratio control apparatus has been disclosed in Japanese laid-open publication No. 61-138840, in which a gas supply pipe and an intake pipe are connected, other than through a mixer, by a bypass passage, the degree of opening of which is controlled by a control device. In this sort of apparatus, however, precise control of the flow rate of the fuel gas in the bypass passage is impossible. Since the volume percentage of the fuel gas in the mixture is remarkably small, even if the gas flow rate changes to a small extent, it causes a relatively large change in the air/fuel ratio. In the catalyst type of engine the mixture is rich and has a volume ratio, e.g., of 11, so that the mixture ratio will not exceed the combustion limit even with such a rough control. However, in the lean mixture combustion type, in which the mixture has a volume ratio of about 22, precise control is required to maintain the ratio within the combustion limit because the flow rate of the gas more rapidly affects the mixture ratio of the lean mixture. Therefore, the known control device cannot be used in the gag engine of lean burn type. Moreover, the known device cannot control the ratio in accordance with the load and engine speed.

Figure 13 illustrates control apparatus previously proposed by the applicants for a lean mixture combustion engine, in which a relief passage 364 is connected to a boost pressure compensation pipe 363, which functions to introduce pressure into an air supply passage 361 to a gas regulator 362. In the relief passage 364, there are provided a flow control valve 365 and a shut-off valve 366, both of which are electronically controlled by a control device 377 receiving signals from a boost sensor 370, a rotation speed sensor 374 and a lean-burn sensor 376. The sensor 370 detects pressure downstream of the throttle 369 in an intake pipe 368. The sensor 374 detects teeth of a gear 373 on a crank shaft to produce output pulse signals. The sensor 376 detects residual oxygen concentration in the exhaust gas. In the control device 377, consisting of a micro-computer and associated components, the optimum or ideal mixture ratio in relation to the engine load and speed is pre-memorized as a map. The optimum mixture ratio is read out from the map in accordance with the engine speed and load resulting from the processing of the signals from the sensors 370 and 374. The actual ratio is obtained from the signal from the sensor 376. The control valve 365 is controlled so that the actual ratio may have the ideal value. In the controlling operation, the flow of the air relieved through the passage 364 changes, and thus the air pressure introduced from the passage 363 to the regulator 362 changes, so that the mixture ratio varies to the optimum value.

When acceleration of the engine is required the control unit 377 controls the shut-off valve 366 to close so that the supply gas pressure increases, resulting in a rich mixture.

The arrangement shown in Figure 13 also includes a cylinder 371, a piston 372, a gas supply pipe 379, a mixer 380, a spark plug 382, an intake valve 383, and an exhaust valve 384.

Although the arrangement described above is superior to the previously stated device, it controls the gas supply pressure, so that the change of the degree of opening of the valve 365 causes rapid change in the mixture ratio, and thus sufficiently precise control is still impossible.

An object of the invention is to provide a check valve device for a gas engine provided with a pre-chamber in which gas is effectively supplied to the pre-chamber even at low gas pressure, and the valve operation characteristics are improved.

The invention provides a gas engine having a pre-combustion chamber in communication with a main combustion chamber and a passage for supply of fuel gas to the pre-chamber, said passage being provided with a check valve adapted to be opened by negative pressure in the pre-chamber, characterised in that said check valve comprises valve guide means connecting to the pre-chamber, a closed cylindrical cap at the upper end of the valve guide means, a valve stem slidably fitted into the valve guide means, and a valve body integral with the valve stem, and in that a connecting passage is provided for connecting a lower space in the valve guide means, which connects to the pre-chamber only when the valve body opens, to an upper space in the cap, the end of the connecting passage which opens into the upper space being spaced from an end of a lubricating oil pipe which also opens to the upper space to supply lubricating oil thereto.

A pre-chamber having a cross-sectional area which gradually decreases toward the main combustion chamber automatically causes circulatory flow of the mixture in the pre-chamber, which improves formation of the mixture. However, a pre-combustion chamber of this shape has previously been disclosed, for example in US 2,914,041.

The invention will be described in more detail with reference to the accompanying drawings, in which:

Figure 1 is a sectional view of a major part of a gas engine according to the invention;

Figure 2 is a graph of velocity of jet flow against fuel consumption;

Figure 3 is a graph of coefficient Ct against fuel consumption;

Figure 4 is a graph of coefficient Ct against coefficient L/D;

Figure 5 is a sectional view of a first embodiment of a check valve according to the present invention;

Figure 6 is a graph of crank shaft angle against valve lift;

Figure 7 is a graph of gas flow against gas pressure;

Figure 8 is a sectional view of a second embodiment of a check valve according to the invention;

Figure 9 is a sectional view of a third embodiment of a check valve according to the second aspect of the invention;

Figure 10 is a schematic view illustrating a conventional gas engine, as already referred to;

Figure 11 is an enlarged sectional view of the engine in Figure 10;

Figure 12 is a sectional view of a conventional check valve, as already referred to; and

Figure 13 is a schematic view of another conventional gas engine, which has already been referred to.

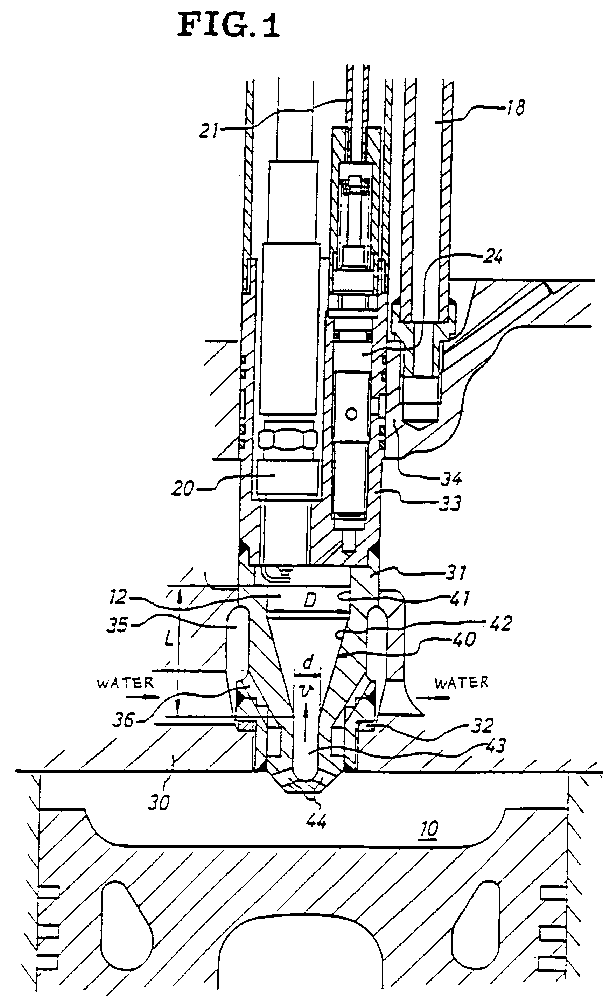

Figure 1 illustrates a gas engine having a pre-combustion chamber, i.e., of pre-chamber type, and having a bore of 100 mm or more. In Figure 1, the same or similar parts and members as those in Figure 10 bear the same reference numerals.

A pre-chamber body 31 is screwed into a cylinder head 30 with packing 32 therebetween. The upper end of the body 31 is welded to a sleeve 33, in which a spark plug 20 and a check valve 24 are arranged. The valve 24 selectively opens and closes a gas passage 18, the lower end 34 of which is in communication with the pre-combustion chamber 12, and is inclined with respect to a centre line of the body 31. A cooling water passage 35 is formed around the body 31 and is connected to a passage 36 therein.

An inner surface 40 of the body 31, defining the chamber 12, has a cylindrical surface portion 41 and a tapered surface portion 42, and thus has a substantially inverted conical shape. The lower end of the space defined by the tapered surface 42 connects to three ports 44 by way of a passage 43 of circular cross-section.

The height or length L of the pre-chamber 12 and the diameters D and d of the larger and smaller ends of the tapered surface 42 have the following relationship:

$$d/D = 0.3 \quad (1)$$
$$L/D = 1.5 \sim 2.0 \quad (2)$$

3

The condition (1) is set for thorough mixing of the gas in the pre-chamber 12 and a lean mixture in the main chamber 10 in a compression stroke. The condition (2) is set for thorough mixing of fuel gas and air in the pre-chamber 12 as well as good combustion and ignitability.

The height of the cylindrical surface 41 may be varied, or the cylindrical surface 41 may be eliminated.

In operation of the afore-mentioned embodiment, negative pressure in the main chamber 10 causes the fuel gas to flow into the pre-chamber 12 through the gas pipe 18 in the intake stroke of the engine. In the subsequent compression stroke, the lean mixture in the main chamber 10 is compressed and flows to the pre-chamber 12 through the ports 44 and the passage 43 at a velocity of v (m/s), and thus is mixed with the fuel gas filling the pre-chamber 12.

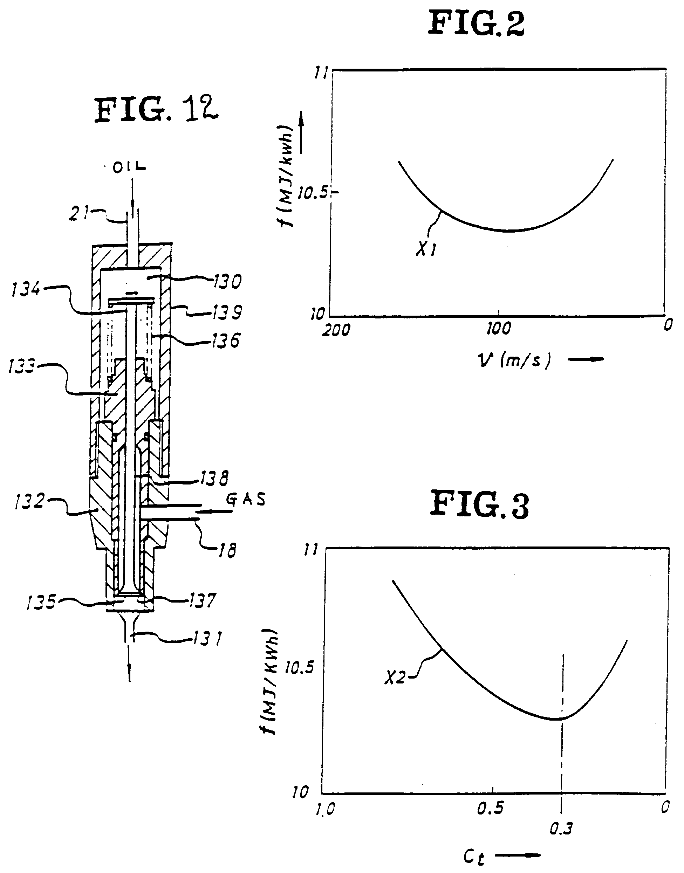

The velocity v affects the combustion condition. As shown in Figure 2 illustrating the relationship between fuel consumption f (MJ/KWh) and the velocity v, if the velocity v is 160 m/s or more, the mixture does not ignite due to blow-off. If the velocity is 30 m/s or less, cyclic variation is very wide and stable driving is impossible. According to the characteristic Z1 in Figure 2, the fuel consumption f is best in the region in which the velocity v is about 90 m/s.

The flow of gas, just described, at velocity v from the passage 43 can be considered as a jet flow. The shape of the inner surface 40 of the pre-chamber 12 has been calculated such that the intended rich mixture may be automatically generated in the pre-chamber 12 by this jet flow, as now described.

First of all, the conditions for forming the intended rich mixture throughout the pre-chamber 12 will be described in connection with the equation (1). According to a reference in "TURBULENT JETS" (N. Rajaratnam, Elservier Scientific Publishing Company, Amsterdam, 1976), the flow rate W of jet flow can be expressed as follows, provided that it flows through a cylindrical passage:

$$\frac{d}{dx}\int_0^{R_o} (p + P \times u^2)\, r\, dr = 0$$

$$\frac{dW}{dx} = 0$$

$$W = \int_0^{R_o} (p + P \times u^2)\, r\, dr$$

x: axial position of the passage

r: radial position

$R_o$: radius of the passage

P: pressure in the passage

p: density

u: flow velocity

A non-dimension parameter H is as follows:

$$H = \{1/ (2\pi)^{1/2}\} \times \{Q / (W/P \times R_o)^{1/2}\}$$

$$= 1/2(m + 1/2)^{1/2}$$

$$= 1/2(1 + 2/Ct^2)^{1/2} \qquad\qquad (3)$$

Q: flow rate

$$Ct = 1/m^{1/2}$$

4

As apparent from the above, the size of the turbulent region is determined by the coefficient Ct. The "m" is a coefficient defined by Curted and Ricon in 1964 together with the Coefficient Ct, and is determined so that the non-dimension parameter H may be modified into the equation (3). The coefficient Ct is a coefficient for determining the size of re-circulation region caused by the flow jet. According to said reference, the turbulent region fills the passage at the Ct = 0.3.

On the other hand, according to the treatise published on ASME paper in 1984 by a company named "Ingersoll-Rand", the flow rate Mr required for re-circulation in an infinitely long tube can be determined as follows:

$$Mr = \int_{BDC}^{SA} (\pi/4)d^2 \times P \times u_e \ (0.32/Ct - 0.43)dt \quad (4)$$

SA:    e.g., a certain time
BDC:   e.g., a certain time
p:     density
$u_e$:    velocity in throat

In the equation (4), the coefficient Ct can be simplified as follows:

$$Ct = [(D/d)^2 - 1/2]^{-1/2}$$

Therefore, the value of d/D substantially becomes as follows when the Ct is 0.3.

$$d/D \doteq 0.3$$

According to experiments with the engine shown in Figure 1 (having a cylinder diameter of 100 mm or more) when the Ct is 0.3, the fuel consumption f becomes minimum as shown by characteristic X2 in Figure 3.

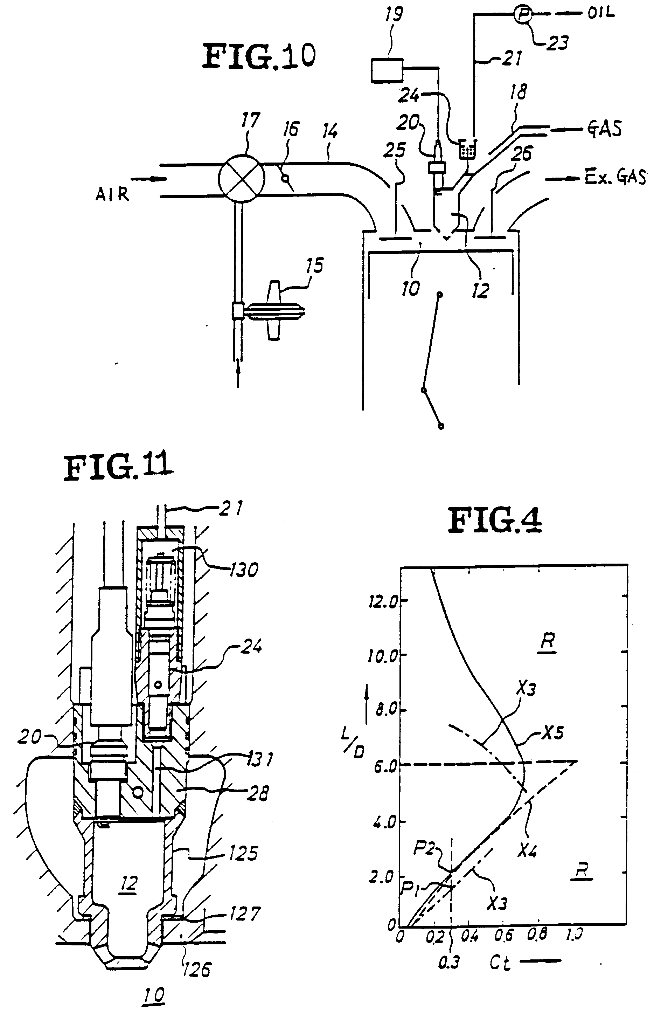

The condition in the equation (2) will now be explained. In connection with the reference "TURBULENT JETS", reference is made to Figure 4 in which L is a length through which the turbulent region is generated by an axially symmetrical passage flow in the cylindrical passage having the diameter of D. There is a turbulent region in a region R of the characteristic X5 derived from the experiment of Hill, the characteristic X4 derived from the experiment of Curtet and Barchilon and characterised X3 derived from the experiment of Becker et al. When the coefficient Ct is 0.3, the turbulent region is generated in a region between L/D = 1.5 at the intersection PI with characteristic X3 and L/D = 2.0 at the intersection P2 with the characteristic X5. Therefore, good mixture is obtained in the area of L/D = 1.5~ 2.0. and inferior mixture is formed in other areas.

According to experiments done by the inventors, if the L/D is less than 1.5, inferior mixture is formed, and when L/D is larger than 2.0, it takes too long a time until the flame in the pre-chamber 12 reaches the main chamber 10, resulting in inferior combustion. Therefore, even in large engines having a cylinder diameter of 100 mm or more, good combustion is achieved when the condition defined in equation (2) is fulfilled.

As stated hereinbefore, the gas engine of pre-chamber type according to the invention achieves following effects.

Since the sectional area of the pre-chamber 12 is gradually reduced toward the main chamber, the jet flow flows into the pre-chamber 12 at an appropriate velocity, so that good combustion is obtained in the pre-chamber 12 even in a large engine having the cylinder diameter of 100 mm or more. The reasons thereof are as follows. If the pre-chamber 12 is of cylindrical shape, the jet flows through the throat at an excessively high velocity in high speed medium engines, resulting in blow-off. However, the pre-chamber 12 having said shape has a relatively small capacity, so that the velocity of the flow jet in the throat is low, and thus the blow-off does not occur. It has been confirmed in experiments by the inventors that a good mixture is formed in any pre-chamber 12 having said shape.

With conditions set as follows:

d/D = 0.3     (1)

L/D = 1.5 2.0     (2)

it is impossible to achieve superior formation of lean mixture in the pre-chamber by equation (1) as well as superior combustion and propagation of the flame by equation (2).

Since pressures in both the main chamber and pre-chamber are balanced through a connecting passage, the check valve body can open rapidly, resulting in good opening characteristics of the valve body.

Since both open ends are apart from each other, the lubricating oil will not mix with the gas, and thus deposit is reduced.

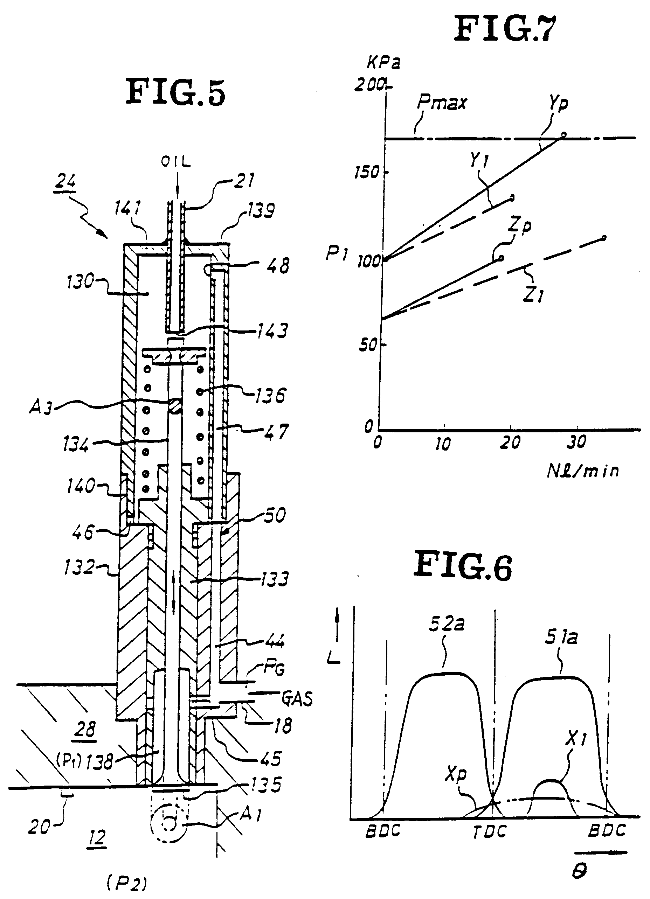

In Figure 5, the check valve 24 includes a valve holder 132 to which a cylindrical cap 139 closed at an upper end wall 141 is screwed through a threaded portion 140. A lubricating oil pipe 21 extends through the wall 141 into the upper space 130. An open end 143 of the pipe 21 is located vertically above a valve stem 134.

The valve holder 132 fitted into the sleeve 28 (Figure 28) has a passage 44, the lower end of which is connected to a lower space 138 through a port 45 in a valve guide 133. The upper end 44 of the passage connects to a passage 47 formed in the wall of the cap 139. The passages 44 and 47 will be connected to each other through an annular groove 46 formed in the lower surface of the cap 139, when the circumferential position of the cap 139 cannot be set to directly connect both passages together. The upper end 48 of the passage 47 opens to the uppermost portion of the chamber 130. These passages 44 to 47 form a connection passage 50. The gas pipe 18 connects to the passage 44.

Thus, the open ends 143 and 48 are located at positions remote from each other, and the oil supplied from the end 143 into the space 130 does not flow through the passage 50 into the lower space 138 and thus the pre-chamber 12.

Operation of the check valve 24 shown in Figure 5 is as follows. The gas pressure P1 in the gas pipe 18 is applied to the lower space 138, so that the valve body 135 receives a valve opening force F expressed in the following equation, in which P2 is the pressure in the pre-chamber 12, and A1 is the area of the valve body 135.

$$F = A1 \times (P1 - P2)     (5)$$

On the other hand, where P3 is the pressure in the upper space 130 of the conventional structure without the connecting passage 50, the pressure P3 is lower than the pressure P1. If the stem 134 has an area of A3, the following force F1 acts to pull up the valve stem 134 in the opening operation.

$$F1 = A3 \times (P3 - P1)     (6)$$

The attractive force F1 caused by the difference between the pressures in the spaces 130 and 138 restrains the opening operation of the valve. However, in Figure 5, since the spaces 130 and 138 are connected through the passage 50, the pressures in the spaces 130 and 138 are balanced, and the pressure P1 is same as the pressure P3.

Therefore, the attractive force F1 does not act in the check valve 24 of Figure 5, which is opened by negative pressure midway of the opening period of the intake valve 25 (Figure 25) as shown in the characteristic X1 (Figure 6), while the intake valve 25 and the exhaust valve 26 operate in accordance with lift characteristics 51a and 52a. Figure 6 is a graph of crank angle against valve lift L. The characteristic X1 shows that the intake valve 25 rapidly opens without loss of the gas, which occurs in conventional structures, in which the differences of the pressures in the spaces 130 and 131 causes a characteristic Xp and opening of the check valve 24 during opening of the exhaust valve 26.

The gas pressure $P_G$ in the gas pipe 18 should be higher than the pressure P2 in the pre-chamber 12. As the flow rate of the gas increases, the pressure P1 in the lower space 138 increases. There is a limit to the pressure $P_G$ of the gas in the gas pipe 18 supplied from mains gas supplies. It is preferable that the pressure P1 in the lower space 138 does not become too high.

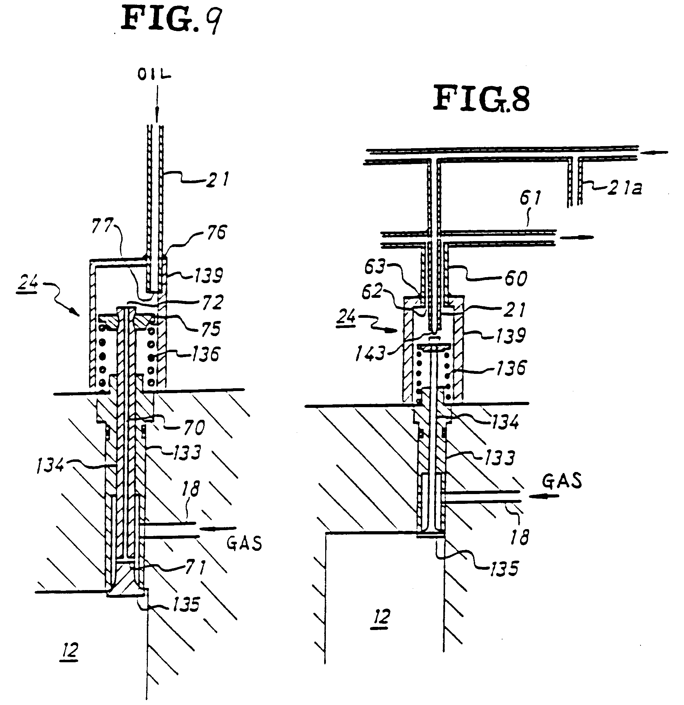

That is, as shown in Figure 7 which is a graph relating to the pressure P1 Kpa (100KPa = 1Hg/cm$^2$), if the passage 50 were not provided, the pressure $P_G$ would reach the maximum value Pmax at the flow rate N of about 25 litre/min. along characteristic Yp, and thus the gas could not be supplied to the pre-chamber 12. When the passage 50 is provided, the characteristic Y1 becomes slower, and further supply to the pre-chamber 12 is possible, Zp is the characteristic when the check valve 24 without the passage SO operates in atmosphere. Z1 is the characteristic when the passage 50 is provided.

In the second embodiment of the check valve 24, shown in Figure 8, the connecting passage is formed by a pipe 60 surrounding the pipe 21 as well as a main pipe 61 connected to the pipe 18. The open end 62 of the pipe 60 is vertically spaced from the open end 143 and opens to the upper end of the space 130. The pipe 60 is welded to the cap 139 at 63. A lubricating oil pipe 21a is also connected to other cylinders (not shown).

This second embodiment is suited to the case where the cap 139 is thin such that the connecting passage cannot be formed in the wall thereof.

In the third embodiment of the check valve 24, shown in Figure 9, the connection passage is constituted by passages 70 and 71 formed in the valve stem 134 as well as the gas pipe 18. An open end 72 of the passage 70 opens at the upper end of the valve stem 134. The lubricating oil pipe 21 is shifted to one side along an inner surface 75 of the upper space 130 and is welded thereto at 76. Therefore, the oil flows from the open end 77 of the pipe 21 along the inner surface 75 without entering into the open end 72.

This third embodiment can be easily assembled and can be arranged in a narrow space.

With a check valve according to the invention (second aspect) the pressures in both the spaces 130 and 138 are balanced through the connection passage 50, 60 or 70 so that the valve body can rapidly open, and thus the opening characteristics of the valve body 35 are improved.

Since the open ends 143, 48, or 143, 62 or 77, 72 are spaced from each other, it is possible to prevent the mixing of the lubricating oil with the gas, and thus the deposit is reduced.

## Claims

1. A gas engine in which a pre-combustion chamber (12) in communication with a main combustion chamber (10), and a passage (18) for supply of fuel gas to the pre-chamber, said passage (18) being provided with a check valve (24) adapted to be opened by negative pressure in the pre-chamber (12), characterised in that said check valve (24) comprises valve guide means (133, 132) connecting to the pre-chamber (12), a closed cylindrical cap (139) at the upper end of the valve guide means (133, 132), a valve stem (134) slidably fitted into the valve guide means (133), and a valve body (135) integral with the valve stem, and in that a connecting passage (50;60;70) is provided for connecting a lower space (138) in the valve guide means (133), which connects to the pre-chamber (12) only when the valve body (135) opens, to an upper space (130) in the cap (139), the end (48,67,72) of the connecting passage (50,60,70) which opens into the upper space (130) being spaced from an end (143, 77) of a lubricating oil pipe (21) which also opens to the upper space (130) to supply lubricating oil thereto.

2. A gas engine according to claim 1 wherein at least a portion of the pre-chamber (12) has a cross-sectional area which gradually decreases towards the main combustion chamber (10), the ratio of the minimum pre-chamber diameter (d) to the maximum pre-chamber diameter (D) being approximately 0.3 and the ratio of the length (L) of the pre-chamber to its maximum diameter (D) being between 1.5 and 2.0.

3. A gas engine according to claim 1 or 2 wherein the pre-chamber (12) has a cylindrical inner surface (41) of a predetermined length at an end portion remote from the main combustion chamber (10), and a tapered surface (42) adjoining this cylindrical surface.

4. A gas engine according to claim 1 or 2 wherein the inner surface of the pre-chamber (12) is entirely formed by a tapered surface converging toward the main combustion chamber (10).

5. A gas engine according to any of claims 1 to 4 wherein the main combustion chamber (10) has a diameter of 100mm or more.

6. A gas engine having a check valve according to claim 1 wherein the connecting passage (50) is formed by a longitudinal passage (44) extending in a wall of the valve guide means (132) in the longitudinal direction thereof, an aperture (45) in the valve guide means (133) connecting an end of the longitudinal passage (44) to the lower space (138), and a passage (47) extending in the longitudinal direction of the cap (139) from the other end of the aforesaid longitudinal passage and opening into the upper end of the upper space (130).

7. A gas engine having a check valve according to claim 1 or 6, wherein the upper end (48, 62) of the connecting passage (50;60) opens to the upper end of the upper space (130), and the lubricating oil pipe (21) penetrates the upper wall of the cap (139) and extends therethrough to a vertically middle position in the upper space (130) in the vicinity of the upper end of the valve stem (134) (Fig. 5).

8. A gas engine having a check valve according to claim 1, wherein the gas pipe (18) for supplying fuel gas is connected to the lower space (138), the lubricating oil pipe (21) penetrates the upper wall of the cap (139) and extends to a vertically middle position in the upper space (130) in the vicinity of the upper end of the valve stem (134), the lubricating oil pipe (21) is surrounded by an outer pipe (60) which opens (at 62) at the upper inner surface of the pre-chamber (12), and the outer pipe (60) is connected to the gas pipe (18) (Fig. 8).

9. A gas engine having a check valve according to claim 1, wherein the passage (18) for supplying fuel gas is connected to the lower space (138), the connecting passage (70) between the upper and lower spaces (130,138) is formed in the valve stem (134), and the lubricating oil pipe (21) penetrating an upper wall of the cap (139) is offset from the upper end (72) of the connecting passage (70) (Fig. 9).

# FIG.1

# FIG.2

# FIG. 12

# FIG.3

# FIG.10

AIR

OIL

GAS

Ex. GAS

17 16 14 19 25 20 24 21 23 18 26

15

10 12

# FIG.11

# FIG.4

21

130

24

20

131

28

125

12

127

126

10

R

12.0

10.0

8.0

L/D

6.0

4.0

2.0

0

X3

X5

P2

P1

X4

R

X3

0   0.2   0.4   0.6   0.8   1.0

0.3   Ct

# FIG.5

# FIG.7

# FIG.6

# FIG.9

OIL

77

24

FIG.8

61

21a

63

62

24

143

21

139

136

76

139

72

75

136

70

133

134

18

GAS

71

135

12

134

133

GAS

18

135

12

# FIG. 13

AIR

361  380  369  368  382  375

383  384

EX. GAS

363

381  370  376

362  372

366  371

AIR

379  373

364  374

365

GAS

377